# EUROPÄISCHE PATENTSCHRIFT

(11) **EP 3 767 050 B1**
(45) Veröffentlichungstag und Bekanntmachung des Hinweises auf die Patenterteilung: **11.01.2023**
(21) Anmeldenummer: 20186488.1
(22) Anmeldetag: 17.07.2020
(51) Int. Cl.: E04F 11/18, F16B 2/12, F16B 5/06

(54) **KLEMMVORRICHTUNG FÜR EIN FLÄCHENELEMENT UND GELÄNDERANORDNUNG MIT EINER KLEMMVORRICHTUNG**
CLAMPING DEVICE FOR A FLAT ELEMENT AND RAILING ARRANGEMENT WITH A CLAMPING DEVICE
DISPOSITIF DE SERRAGE POUR UN ÉLÉMENT DE SURFACE ET AGENCEMENT DE GARDE-CORPS DOTÉ D'UN DISPOSITIF DE SERRAGE

(30) Priorität: 17.07.2019 DE 202019103957 U
(43) Veröffentlichungstag der Anmeldung: 20.01.2021
(73) Patentinhaber: Pauli + Sohn GmbH Metallwaren, 51597 Morsbach (DE)
(72) Erfinder: SCHNEIDER, Torben, 51597 Morsbach (DE)
(74) Vertreter: Neumann Müller Oberwalleney Patentanwälte PartG mbB

(56) Entgegenhaltungen:
- WO-A1-2013/124806
- DE-A1-102006 007 185
- DE-A1-102017 121 130
- DE-U1-202005 009 826

## Beschreibung

Die Erfindung betrifft eine Klemmvorrichtung nach dem Oberbegriff des Anspruchs 1.

Derartige Klemmvorrichtungen können beispielsweise in Geländern verbaut sein, bei denen Flächenelemente zwischen Tragstrukturen, zum Beispiel in Form von Geländerpfosten, zum Einsatz kommen. In solchen Geländern sind die Flächenelemente über die Klemmvorrichtungen an jeweils zwei der Geländerpfosten gehalten. Die Flächenelemente können Glasplatten sein, weshalb die Klemmvorrichtungen auch als Glasklemmen bezeichnet werden können. Die jeweilige Klemmvorrichtung weist zwei Klemmenbacken auf, zwischen denen die Glasplatte fixiert werden kann. Um dabei die Glasplatte in Position zu halten, ohne diese zu verkratzen oder um deren Zerbrechen zu verhindern, können elastische Dichtungen zwischen der Glasplatte und der jeweiligen Klemmbacke eingelegt werden. Zudem verbessern die Dichtungen die Haftreibung mit der Glasplatte. Aus der DE 20 2005 009 826 U1 ist eine solche Glasklemme mit zwei elastischen Dichtungen bekannt, die zwischen den Klemmbacken und der zu haltenden Glasplatte angeordnet sind. Um die Dichtungen an den Klemmbacken zu halten, weisen die Dichtungen Noppen auf, die in korrespondierende Bohrungen in den Innenseiten der Klemmbacken eingesetzt sind. Da bei Montage der Glasplatte zwischen der Glasplatte und den Dichtungen ungewollt Umgebungsluft eingeschlossen werden könne, soll zur Verbesserung der Haftreibung zwischen den Dichtungen und der Glasplatte die Innenseiten der Klemmbacken wabenförmig ausgestaltet sein. Dadurch sollen die eingeschlossenen Luftpolster die elastischen Dichtungen lokal in die wabenförmig angeordneten Aussparungen drücken, um in den übrigen Bereichen einen flächigen Kontakt zwischen den Dichtungen und der Glasplatte aufrecht zu erhalten. Als nachteilig wird jedoch empfunden, dass je nach Glasstärke der zu haltenden Glasplatte unterschiedlich dicke Gummipuffer eingesetzt werden müssen.

Aus der DE 10 2017 121 130 A1 ist eine verstellbare Glasklemme bekannt, die für die Montage von Glasplatten verschiedener Materialstärken eingesetzt werden kann. Hierzu weist die Glasklemme zwei Einstellringe auf, wobei den beiden Klemmbacken jeweils einer der beiden Einstellringe zugeordnet ist. An den einander zugewandten Innenseiten der Einstellringe sind elastische Dichtungen angeordnet, die mit der zu haltenden Glasplatte in Anlage bringbar sind. Der Abstand zwischen den elastischen Dichtungen kann durch Drehen der Einstellringe verändert werden. Als nachteilig wird jedoch empfunden, dass die Glasklemme eine hohe Anzahl an Einzelbauteilen aufweist.

Aufgabe der vorliegenden Erfindung ist es daher, eine Klemmvorrichtung der eingangs genannten Art bereitzustellen, die Flächenelemente unterschiedlicher Materialstärken sicher einspannen kann, mit wenigen Bauteilen auskommt und einfach zu montieren ist.

Diese Aufgabe ist durch die Klemmvorrichtung gemäß Anspruch 1 gelöst.

Die Klemmvorrichtung für ein Flächenelement umfasst einen Verbindungsabschnitt und einen entlang einer Längsachse der Klemmvorrichtung benachbart zum Verbindungsabschnitt angeordneten Klemmabschnitt. Die Klemmvorrichtung umfasst weiterhin zwei Klemmbacken und zwei Einlageelemente. Die beiden Klemmbacken sind im Verbindungsabschnitt relativ zueinander entlang einer Klemmachse bewegbar miteinander verbunden und begrenzen im Klemmabschnitt zwischen sich einen Aufnahmeraum für das Flächenelement. Die beiden Einlageelemente sind im Klemmabschnitt zwischen den beiden Klemmbacken angeordnet, wobei den beiden Klemmbacken jeweils eines der beiden Einlageelemente zugeordnet ist. Die beiden Einlageelemente weisen jeweils zwei Anlageflächen auf, von denen eine der beiden Anlageflächen mit der zugeordneten Klemmbacke in Anlage ist und eine andere der beiden Anlageflächen mit dem Flächenelement in Anlage bringbar ist. Erfindungsgemäß ist vorgesehen, dass jede der zwei Anlageflächen mindestens 25 Prozent der Summe der zwei Anlageflächen des jeweiligen Einlageelementes beträgt, wobei zumindest eine der beiden Klemmbacken eine Aufnahmekontur aufweist, in welcher das zugeordnete Einlageelement in einer ersten Aufnahmeposition, in der zwischen den beiden Einlageelementen ein erster Abstand gebildet ist, oder in einer zweiten Aufnahmeposition, in der zwischen den beiden Einlageelementen ein zweiter Abstand gebildet ist, der ungleich dem ersten Abstand ist, aufgenommen ist. Weiterhin ist vorgesehen, dass das jeweilige Einlageelement um eine Wendeachse wendbar ausgebildet, sodass das jeweilige Einlageelement in der ersten Aufnahmeposition mit einer ersten der beiden Anlageflächen mit dem zu haltenden Flächenelement in Anlage bringbar ist und in der zweiten Aufnahmeposition mit einer zweiten der beiden Anlageflächen mit dem zu haltenden Flächenelement in Anlage bringbar ist, und/oder dass die erste Aufnahmeposition und die zweite Aufnahmeposition des jeweiligen Einlageelementes entlang der Längsachse nebeneinander angeordnet sind.

Von Vorteil ist, dass durch Veränderung der Position wenigstens eines der beiden Einlageelemente in der zumindest einen Aufnahmekontur der zugeordneten Klemmbacke der Abstand zwischen den beiden Einlageelementen verändert werden kann. Denn die zwei Aufnahmepositionen der wenigstens einen Aufnahmekontur geben zwei sich voneinander unterscheidende, bestimmte räumliche Stellungen beziehungsweise Lagen des zugeordneten Einlageelementes in dem Klemmabschnitt vor. Damit kann das Einlageelemente nur in den zwei Aufnahmepositionen in der Aufnahmekontur eingesetzt werden. Somit können mit der Klemmvorrichtung Flächenelemente mit zumindest zwei sich voneinander unterscheidenden Materialstärken eingespannt werden. Insbesondere verläuft die Längsachse senkrecht zur Klemmachse. Weiterhin ist von Vorteil, dass zwischen dem jeweiligen Einlageelement und dem zu haltenden Flächenelement sowohl in der ersten Aufnahmeposition als auch in der zweiten Aufnahmeposition stets ein ausreichend großer Flächenkontakt besteht, da jede der zwei Anlageflächen des jeweiligen Einlageelementes mindestens 25 Prozent der Summe der zwei Anlageflächen des jeweiligen Einlageelementes beträgt. Dadurch kann das zu haltende Flächenelement zwischen den beiden Klemmbacken sicher kraftschlüssig eingespannt, respektive klemmend fixiert werden. Insbesondere kann jede der zwei Anlageflächen des jeweiligen Einlageelementes maximal 75 Prozent der Summe der zwei Anlageflächen des jeweiligen Einlageelementes betragen. Insbesondere können die beiden Klemmbacken jeweils eine eigene Aufnahmekontur aufweisen. Dadurch, dass die beiden Einlageelemente unabhängig voneinander in deren jeweilige erste Aufnahmeposition beziehungsweise zweite Aufnahmeposition an der jeweils zugeordneten Klemmbacke aufgenommen sein können, können mit der Klemmvorrichtung drei definierte, sich voneinander unterscheidende Abstände zwischen den beiden Einlageelementen eingestellt werden. Entsprechend kann die Klemmvorrichtung Flächenelemente mit drei unterschiedlichen Materialstärken einspannen. Die drei einstellbaren Abstände können den Materialstärken handelsüblicher Flächenelementen entsprechen. Beispielsweise werden im Geländerbau als Flächenelemente Glasscheiben eingesetzt, die je nach Größe und berechneter Belastung eine Materialstärke beziehungsweise Glasstärke von 6 Millimetern, 10 Millimetern oder 12 Millimetern aufweisen können. Die Abstände zwischen den beiden Einlageelementen entsprechen vorzugsweise den Abständen zwischen den in der jeweiligen Aufnahmeposition einander zugewandten Anlageflächen der Einlageelemente. Wenn das zu haltende Flächenelement im Aufnahmeraum zwischen den beiden Klemmbacken eingespannt ist, liegen die einander zugewandten Anlageflächen der beiden Einlageelemente an den beiden Außenflächen des Flächenelementes an. Vorzugsweise sind die beiden Anlageflächen des jeweiligen Einlageelementes parallel zueinander angeordnet.

Des Weiteren können die Aufnahmekonturen der beiden Klemmbacken flächensymmetrisch zu einer Mittelebene ausgebildet sein. Die Längsachse kann parallel zur Mittelebene und/oder die Klemmachse kann senkrecht zur Mittelebene verlaufen. Insbesondere können die beiden Einlageelemente identisch gestaltet sein. Dadurch wird die Herstellung und Handhabung der Klemmvorrichtung, insbesondere der Einlageelemente vereinfacht. Die Mittelebene kann eine Ebene sein, die mit gleichem Abstand, respektive gleichbeabstandet zu den beiden Aufnahmekonturen zwischen den beiden Klemmbacken liegt. Um die von den Klemmbacken ausgeübte Klemmkraft gleichmäßig verteilt auf das zu haltende Flächenelement zu übertragen, kann die Mittelebene orthogonal zur Klemmachse verlaufen. Insbesondere ist die Mittelebene, wenn das Flächenelement zwischen den beiden Klemmbacken gehalten ist, parallel zu einer von dem Flächenelement aufgespannten Hauptebene beziehungsweise parallel zu den beiden voneinander abgewandten Außenseiten des Flächenelementes. Die Anlageflächen der beiden Einlageelemente können parallel zu der Mittelebene ausgerichtet sein.

Weiterhin kann die wenigstens eine Aufnahmekontur der jeweiligen Klemmbacke zumindest eine Aussparung aufweisen, in der das zugeordnete Einlageelement in der zweiten Aufnahmeposition zumindest teilweise angeordnet sein kann. Dadurch kann auf einfache Weise der Abstand zwischen den beiden Einlageelementen verändert werden. In der zweiten Aufnahmeposition kann somit im Vergleich zu der ersten Aufnahmeposition der Abstand zwischen den beiden Einlageelementen größer sein. Die wenigstens eine Aufnahmekontur der jeweiligen Klemmbacke kann eine Stützfläche aufweisen, von der sich die wenigstens eine Aussparung in einer Richtung weg von der gegenüberliegenden Klemmbacke in die jeweilige Klemmbacke hinein erstreckt. Die wenigstens eine Aussparung kann als Vertiefung gestaltet sein, die einen Boden aufweist. Das zugeordnete Einlageelement kann sich in der zweiten Aufnahmeposition am Boden der wenigstens einen Aussparung abstützen. Möglich ist aber auch, dass die wenigstens eine Aussparung als eine sich durch die jeweilige Klemmbacke erstreckende, durchgehende Aussparung gebildet ist, die damit an beiden Enden offen ausgebildet sein kann. Das zugeordnete Einlageelement kann sich in der ersten Aufnahmeposition und vorzugsweise auch in der zweiten Aufnahmeposition an der Stützfläche der zugeordneten Klemmbacke abstützen. Zur Vergrößerung der mit der Stützfläche der zugeordneten Klemmbacke in Kontakt kommenden Fläche kann eine insbesondere senkrecht zur Klemmachse ausgerichtete Außenseite des jeweiligen Einlageelementes eben ausgebildet sein. Die eben ausgebildete Außenseite kann die zweite Außenseite des jeweiligen Einlageelementes sein, die auch die zweite Anlagefläche umfasst. Die zweite Anlagefläche kann sich über die gesamte Oberfläche der zweiten Außenseite erstrecken. Weiterhin können die beiden voneinander abgewandten Außenseiten des jeweiligen Einlageelementes parallel zueinander ausgerichtete Flächen aufweisen. Insbesondere sind die parallel zueinander ausgerichteten Flächen auf den beiden Außenseiten des jeweiligen Einlageelementes gleich groß.

Gemäß der ersten Ausgestaltung ist das jeweilige Einlageelement um die Wendeachse wendbar ausgebildet, sodass das jeweilige Einlageelement in der ersten Aufnahmeposition mit der ersten Anlagefläche mit dem zu haltenden Flächenelement in Anlage bringbar ist und in der zweiten Aufnahmeposition mit der zweiten Anlagefläche mit dem zu haltenden Flächenelement in Anlage bringbar ist. Ein solches Einlageelement kann auch als Wendeeinsatz bezeichnet werden. Insbesondere weist das jeweilige Einlageelement zwei voneinander abgewandte Seitenflächen auf, die parallel zur Klemmachse ausgerichtet sein können. Die beiden Seitenflächen können zu der Wendeachse achssymmetrisch ausgebildet sein. Die Wendeachse kann senkrecht zur Klemmachse und/oder senkrecht zur Längsachse ausgerichtet sein.

Die beiden Anlageflächen des jeweiligen Einlageelementes können unterschiedlich groß sein. Insbesondere kann die erste Anlagefläche des jeweiligen Einlageelementes kleiner als die zweite Anlagefläche des jeweiligen Einlageelementes sein. In der ersten Aufnahmeposition ist der Abstand zwischen den beiden Einlageelementen kleiner als in der ersten Aufnahmeposition. Dadurch, dass das in der ersten Aufnahmeposition zu haltende Flächenelement eine geringere Materialstärke aufweist und damit ein geringeres Eigengewicht aufweisen kann, kann die erste Anlagefläche kleiner als die zweite Anlagefläche sein. Durch die kleinere erste Anlagefläche ergibt sich auf der die erste Anlagefläche umfassenden ersten Außenseiten des jeweiligen Einlageelementes eine räumlich von der ersten Anlagefläche getrennte Grundfläche, mit der das jeweilige Einlageelement in der zweiten Aufnahmeposition an der Stützfläche der zugeordneten Klemmbacke anliegt. Dadurch können die Klemmkräfte besser auf das zu haltende Flächenelement übertragen werden.

Weiterhin kann das jeweilige Einlageelement zumindest einen Vorsprung aufweisen, der bei Anordnung des jeweiligen Einlageelementes in der zweiten Aufnahmeposition in die zumindest eine Aussparung der zugeordneten Klemmbacke ragt. Die erste Anlagefläche kann an dem zumindest einen Vorsprung ausgebildet sein. Dadurch kann auf einfache Weise der Abstand zwischen den beiden Einlageelementen in den unterschiedlichen Aufnahmepositionen verändert werden. Um einen sicheren Halt des Einlageelementes in der zumindest einen Aufnahmekontur der zugeordneten Klemmbacke zu gewährleisten, kann der zumindest eine Vorsprung des jeweiligen Einlageelementes in der zweiten Aufnahmeposition formschlüssig in die zumindest eine Aussparung der zugeordneten Klemmbacke eingreifen.

Insbesondere kann die wenigstens eine Aufnahmekontur der jeweiligen Klemmbacke mehrere der Aussparungen aufweisen, die durch Stege voneinander getrennt sind, wobei die Stege Stegoberflächen aufweisen. Die Stützfläche der jeweiligen Klemmbacke kann die jeweiligen Stegoberflächen umfassen. Dadurch wird die Stützfläche, an der sich das zugeordnete Einlageelement in der ersten und vorzugsweise auch in der zweiten Aufnahmeposition abstützen kann, vergrößert. Das zugeordnete Einlageelemente kann mehrere der Vorsprünge aufweisen, die in der zweiten Aufnahmeposition des zugeordneten Einlageelementes in die Aussparungen der zugeordneten Klemmbacke ragen. Die Aussparungen können als Längsnuten ausgebildet sein, die sich parallel zur Längsachse erstrecken können. Die erste Außenseite des jeweiligen Einlageelementes, die die erste Anlagefläche des jeweiligen Einlageelementes umfasst, kann die Vorsprünge aufweisen, wobei die Vorsprünge gemeinsam eine Stufe bilden können. Die Stufe kann durch Längsrillen zur Aufnahme der Stege unterbrochen sein. Die Längsrillen können sich parallel zur Wendeachse erstrecken. Statt der gestuften Ausgestaltung kann das jeweilige Einlageelement an beiden Außenseiten eben ausgebildet sein und beispielsweise eine insgesamt quaderförmige Grundform aufweisen. Die beiden Außenseiten können Rillen aufweisen, um durch Wenden des jeweiligen Einlageelementes um die Wendeachse dieses in die jeweils andere Aufnahmeposition überführen zu können. Die Rillen können auf beiden Außenseiten unterschiedlich tief gestaltet sein, um die Einlageelemente in der zugeordneten Aufnahmekontur unterschiedlich tief einsetzen zu können. Auf diese Weise ergeben sich in den beiden Aufnahmepositionen unterschiedliche Abstände zwischen den Einlageelementen.

Gemäß der zweiten Ausgestaltung sind die erste Aufnahmeposition und die zweite Aufnahmeposition des jeweiligen Einlageelementes entlang der Längsachse nebeneinander angeordnet. Dadurch kann der Abstand zwischen den beiden Einlageelementen auf einfache Weise durch Versetzen des jeweiligen Einlageelementes entlang der Längsachse in eine der beiden Aufnahmepositionen verändert werden. Die zweite Ausgestaltung kann eine Alternative zu der vorbeschriebenen ersten Ausgestaltung sein, wobei grundsätzlich auch möglich ist, dass das jeweilige Einlageelement zur Veränderung der Aufnahmeposition sowohl gewendet (erste Ausgestaltung) als auch entlang der Längsachse versetzt (zweite Ausgestaltung) wird.

Für sämtliche Ausgestaltungen gilt wiederum gleichermaßen, dass zumindest eines der beiden Einlageelemente integral als monolithische Einheit ausgebildet sein kann. Dadurch ist das jeweilige Einlageelement als ein Bauteil handhabbar, wodurch die Herstellung und Handhabung der Klemmvorrichtung, insbesondere der Einlageelemente vereinfacht wird. In bevorzugter Weise sind die beiden Einlageelemente identisch ausgebildet. Die Einlageelemente können formfeste Formteile sein und können aus einem Kunststoff hergestellt sein. Insbesondere können die Einlageelemente elastisch verformbar sein und können aus einem elastomeren Material, beispielsweise einem Gummi, sein. Die Klemmbacken und vorzugsweise auch das Wandelement können aus Metall, beispielsweise aus Aluminium sein. Dadurch wird eine stabile Klemmvorrichtung bereitgestellt, die ein möglichst geringes Gewicht aufweist. Durch die Einlegeelemente wird ein direkter Kontakt zwischen dem Flächenelement und den Klemmbacken verhindert, um ein Verkratzen des zu haltenden Flächenelements, insbesondere einer Glasplatte zu verhindern.

Die Klemmbacken sind insbesondere nur über den Verbindungsabschnitt miteinander verbunden. Um die beiden Klemmbacken gegeneinander zu verspannen, kann zumindest ein Spannelement vorgesehen sein, das in dem Verbindungsabschnitt die beiden Klemmbacken gegeneinander verspannt. Das zumindest eine Spannelement kann eine Schraube sein, die in eine entsprechende Gewindebohrung im Verbindungsabschnitt der Klemmvorrichtung eingeschraubt werden kann. Die zumindest eine Gewindebohrung kann an einer der beiden Klemmbacken ausgebildet sein. Die andere der beiden Klemmbacken kann entsprechend zumindest eine konzentrisch zur jeweiligen Gewindebohrung angeordnete Bohrung aufweisen, die von der jeweiligen Schrauben durchgriffen wird. Vorzugsweise weist die Klemmvorrichtung zwei der Spannelemente auf.

Die Klemmvorrichtung kann das zu haltenden Flächenelement abschnittsweise aufnehmen, respektive einen Eckbereich oder den Seitenrand des zu haltenden Flächenelementes mit den beiden Klemmbacken umgreifen. Dabei kann das zu haltende Flächenelement über die Klemmvorrichtung an einem ortsfesten Tragteil, insbesondere einer vertikal aufstehenden Stütze wie einem Geländerpfosten oder einer Gebäudewand befestigt sein. Im Geländerbau kann die Klemmvorrichtung zum Einspannen des Seitenrandes der Glasplatte für zum Beispiel eine verglaste Brüstung verwendet werden. Das zu haltende Flächenelement kann entsprechend vertikal angeordnet sein und kann frei hängen, das heißt von einem Untergrund und den seitlichen Stützen beabstandet sein. Um dabei ein Abrutschen des Flächenelementes zwischen den beiden Klemmbacken nach unten, das heißt in Richtung der Schwerkraft, zu verhindern, kann die Klemmvorrichtung im Klemmabschnitt ein Wandelement aufweisen, das den Klemmabschnitt nach unten hin begrenzt. Entsprechend kann das zu haltende Flächenelement mit dessen Eckbereich in dem Aufnahmeraum der Klemmvorrichtung aufgenommen werden. Wenn die Klemmvorrichtung an einem der oberen Eckbereiche des Flächenelementes ansetzt, kann dort ebenfalls das Wandelement eingesetzt werden, um den Klemmabschnitt nach oben hin optisch abzuschließen. Zudem kann das Wandelement das Eindringen von Schmutz und Wasser in den Klemmabschnitt verhindern.

Vorzugsweise kann das Wandelement in zwei Positionen gesteckt werden, um die Klemmvorrichtung wahlweise an einem linken oder rechten Seitenrand des zu haltenden Flächenelementes ansetzen zu können. Auf diese Weise kann ein und dieselbe Klemmvorrichtung durch Anpassen der Steckposition des Wandelementes an einem der insbesondere vier Eckbereichen des zu haltenden Flächenelementes angesetzt werden. Insbesondere sind im Klemmabschnitt an einander zugewandten Innenseiten der beiden Klemmbacken Randbereiche mit Nuten ausgebildet, wobei jeweils eine der Nuten der einen Klemmbacke mit einer der Nuten der gegenüberliegenden Klemmbacke ein Nutenpaar bildet. Hierzu kann das Wandelement zwei Stege aufweisen, die wahlweise in eines der Nutenpaare einsteckbar sind.

Weiterhin kann das Wandelement an einer dem Verbindungsabschnitt zugewandten Stirnseite eine Feder aufweisen. Des Weiteren können in einem der beiden Klemmbacken zwei Schlitze ausgebildet sein, wobei die Feder wahlweise in einen der beiden Schlitze einschiebbar ist. Vorzugsweise sind die Schlitze in derjenigen Klemmbacke ausgebildet, über die die Klemmvorrichtung an dem Tragteil befestigt werden kann. Die Schlitze verlaufen vorzugsweise parallel zur Klemmachse. Vorzugsweise bildet die Feder eine parallel zur Klemmachse verlaufende Hinterschneidung aus. Dadurch ist das Wandteil sicher an der jeweiligen Klemmbacke gehalten und kann nur noch durch Verlagerung des Wandteils entlang der Klemmachse von der jeweiligen Klemmbacke entfernt werden. Die Feder kann somit T-förmig oder Schwalbenschwanz-förmig ausgebildet sein oder zum Beispiel ein im Querschnitt rundes Ende aufweisen.

Des Weiteren kann vorgesehen sein, dass die Stützfläche der jeweiligen Klemmbacke gegenüber dem Randbereich der jeweiligen Innenseite zurückgesetzt ist. Um eine der beiden Anlageflächen mit dem Flächenelement in Anlage zu bringen, steht unabhängig von der Aufnahmeposition des jeweiligen Einlageelementes die der jeweils gegenüberliegend angeordneten Klemmbacke zugewandte Anlagefläche bezogen auf die Klemmachse axial über den Randbereich der zugeordneten Klemmbacke vor. In bevorzugter Weise ist die wenigstens eine Aufnahmekontur der jeweiligen Klemmbacke durch den Randbereich begrenzt. Insbesondere ist das zugeordnete Einlageelement in der Aufnahmekontur aufgenommen und ragt seitlich nicht über diese hinaus. Als seitlich wird in diesem Zusammenhang eine Richtung quer zur Klemmachse verstanden. Durch die zurückgesetzte Stützfläche kann das jeweilige Einlageelement in der zugeordneten Klemmbacke durch den Randbereich seitlich gestützt sein.

Eine weitere Lösung der oben genannten Aufgabe besteht in einer Geländeranordnung mit zumindest einem Tragteil, an dem zumindest eine der vorbeschriebenen Klemmvorrichtung für ein Flächenelement angeordnet ist. Durch die erfindungsgemäße Geländeranordnung ergeben sich dieselben Vorteile, wie sie im Zusammenhang mit der erfindungsgemäßen Klemmvorrichtung beschrieben worden sind, sodass hier abkürzend auf obige Beschreibung Bezug genommen wird. Dabei versteht es sich, dass alle genannten Ausgestaltungen der Klemmvorrichtung auf die Geländeranordnung übertragbar sind und umgekehrt. Insgesamt ermöglicht die erfindungsgemäße Geländeranordnung das sichere Einspannen von Flächenelementen unterschiedlicher Materialdicken. Zudem kommt die erfindungsgemäße Geländeranordnung mit wenigen Bauteilen aus und ist einfach zu montieren.

Die Geländeranordnung umfasst zweckmäßigerweise mindestens zwei Tragteile, zwischen denen das zu haltende Flächenelement eingespannt sein kann. Für jedes zu haltende Flächenelement kann die Geländeranordnung zumindest zwei der Klemmvorrichtungen, oder eine höhere, gerade Zahl an Klemmvorrichtungen, insbesondere vier der Klemmvorrichtungen aufweisen, die die Eckbereiche beziehungsweise die Seitenränder des Flächenelementes umgreifen. Dabei kann an dem jeweiligen Tragteil auf der dem zu haltenden Flächenelement zugewandten Seite des Tragteils zumindest eine der Klemmvorrichtungen, vorzugsweise zwei der Klemmvorrichtungen angeordnet sein. Die Geländeranordnung kann weiterhin zumindest ein Flächenelement umfassen, das zwischen jeweils zwei benachbarten Tragteilen eingespannt sein kann.

Bevorzugte Ausführungsformen werden nachstehend anhand der Zeichnungsfiguren erläutert. Hierin zeigt:
- Figur 1: eine Klemmvorrichtung gemäß einer Ausführungsform in Explosionsdarstellung;
- Figur 2: eine Teildarstellung der Klemmvorrichtung aus Figur 1 in perspektivischer Schrägansicht;
- Figur 3: die Teildarstellung der Klemmvorrichtung gemäß Figur 2 in Draufsicht;
- Figur 4: eine vergrößerte Teildarstellung der Klemmvorrichtung eines in Figur 3 im Kreis IV dargestellten Bereichs in Draufsicht;
- Figur 5: die Klemmvorrichtung aus Figur 1 in Explosionsdarstellung, wobei die Klemmvorrichtung in einem ersten Einbauzustand gezeigt ist;
- Figur 6: die Klemmvorrichtung nach Figur 5 in schematischer Explosionsdarstellung;
- Figur 7: die Klemmvorrichtung nach Figur 5 in Seitenansicht;
- Figur 8: die Klemmvorrichtung in Schnittansicht entlang der in Figur 7 gezeigten Schnittlinie VIII-VIII;
- Figur 9: die Klemmvorrichtung aus Figur 1 in schematischer Explosionsdarstellung, wobei die Klemmvorrichtung in einem zweiten Einbauzustand gezeigt ist;
- Figur 10: die Klemmvorrichtung nach Figur 9 in Schnittansicht;
- Figur 11: die Klemmvorrichtung aus Figur 1 in schematischer Explosionsdarstellung, wobei die Klemmvorrichtung in einem dritten Einbauzustand gezeigt ist;
- Figur 12: die Klemmvorrichtung nach Figur 11 in Schnittansicht;
- Figur 13: eine Klemmvorrichtung gemäß einer weiteren Ausführungsform in schematischer Explosionsdarstellung; und
- Figur 14: eine Klemmvorrichtung gemäß einer noch weiteren Ausführungsform in schematischer Explosionsdarstellung.

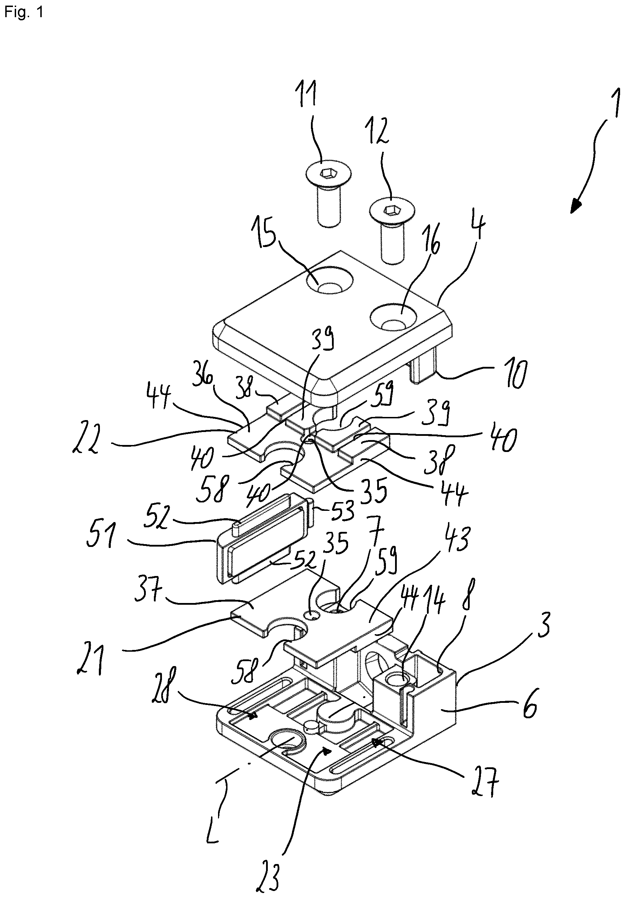

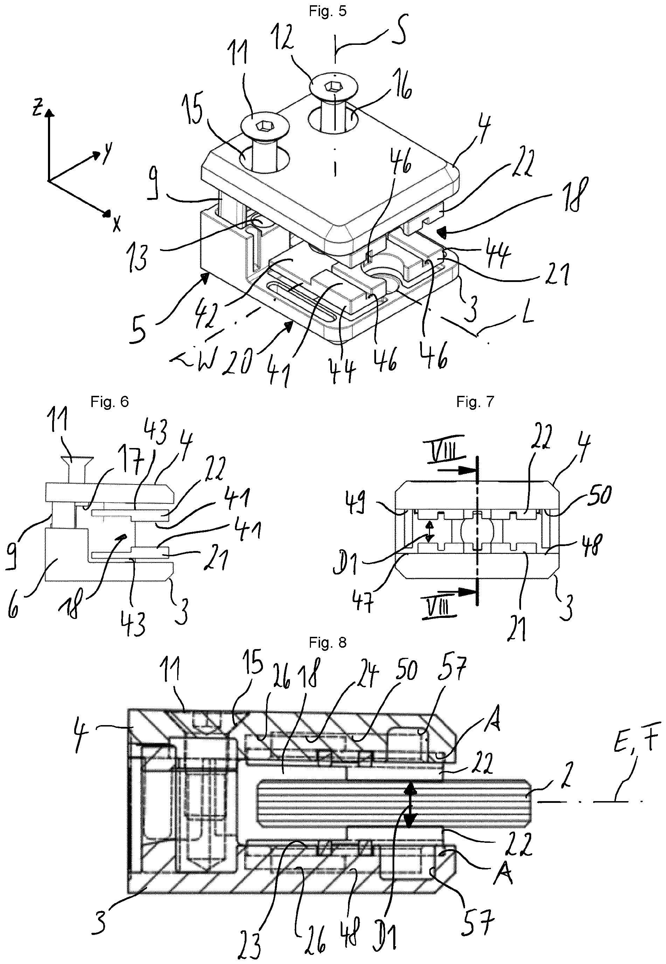

In Figuren 1 bis 12 ist eine Klemmvorrichtung 1 für ein Flächenelement 2, insbesondere einer Brüstung oder eines Geländers, gemäß einer Ausführungsform der vorliegenden Erfindung dargestellt, mit der Flächenelemente 2 unterschiedlicher Materialstärken verspannt werden können. Die Klemmvorrichtung 1 dient in an sich bekannter Weise der Befestigung des Flächenelementes 2 an einem Tragteil (nicht gezeigt). Das Tragteil kann beispielsweise eine vertikal aufstehende Stütze, ein Geländerpfosten oder ein vertikaler Gebäudeteil, zum Beispiel innerhalb einer Laibung eines bodentiefen Fensters, sein. In der Figur 5 ist zur Verdeutlichung der Ausrichtung der Klemmvorrichtung 1 im Raum ein kartesisches Koordinatensystem mit den Raumachsen X, Y und Z eingezeichnet.

Das Flächenelement 2 ist eine Platte, bei der es sich vorzugsweise um eine Glasplatte aus Verbundsicherheitsglas handelt. Die Klemmvorrichtung 1, die auch als Glasklemme bezeichnet werden kann, wird im Randbereich des Flächenelementes 2 angesetzt. Das Flächenelement 2 spannt eine Plattenebene F auf, die im gehaltenen Zustand des Flächenelementes 2 parallel zu einer von den beiden Raumachsen X, Y aufgespannten Ebene ausgerichtet ist.

Die Klemmvorrichtung 1 weist eine erste Klemmbacke 3 und eine zweite Klemmbacke 4 auf. Die beiden Klemmbacken 3, 4 sind in einem Verbindungsabschnitt 5 der Klemmvorrichtung 1 relativ zueinander entlang einer parallel zur Raumachse Z verlaufenden Klemmachse S bewegbar miteinander verbunden. Im Verbindungsabschnitt 5 weist hierzu die erste Klemmbacke 3 einen entlang der Klemmachse S vorstehenden Sockel 6 mit zwei Ausnehmungen 7, 8 auf, in die zwei an der zweiten Klemmbacke 4 ausgebildete Füße 9, 10 eingreifen. Entsprechend sind die beiden Klemmbacken 3, 4 in einer von den beiden Raumachsen X, Y aufgespannten Ebene verschiebungssicher miteinander verriegelt.

Zur Befestigung der beiden Klemmbacken 3, 4 miteinander sind, hier, zwei Spannelemente 11, 12 vorgesehen. Die Spannelemente 11, 12 dienen gleichzeitig der Einspannung des Flächenelementes 2 zwischen den beiden Klemmbacken 3, 4. Konkret sind in dem Sockel 6 zwei parallel zur Klemmachse S verlaufende Gewindebohrungen 13, 14 ausgebildet, die mit zwei in der zweiten Klemmbacke 4 ausgebildeten Durchgangsbohrungen 15, 16 fluchten. Die beiden als Schrauben ausgebildeten Spannelemente 11, 12 durchgreifen die Durchgangsbohrungen 15, 16 und sind in den Gewindebohrungen 13, 14 eingeschraubt. Durch Betätigen der Spannelemente 11, 12, hier durch Festziehen der beiden Schrauben, werden die beiden Klemmbacken 3, 4 geringfügig aufeinander zubewegt, wodurch das zwischen diesen anordbare Flächenelement 2 klemmend festgelegt, respektive verspannt wird. Die Klemmvorrichtung 1 weist hierbei Anschläge 17 auf, die bezogen auf die Klemmachse S einen Aufnahmeraum 18 für das zu haltende Flächenelement 2 axial begrenzen.

Zur Befestigung der Klemmvorrichtung 1 an dem Tragteil weist die erste Klemmbacke 3 mittig zwischen den beiden Ausnehmungen 7, 8 eine im Sockel 6 ausgebildete Längsbohrung 19 auf, die von einer Befestigungsschraube (nicht gezeigt) durchgriffen sein kann. Entsprechend kann die erste Klemmbacke 3 unmittelbar an dem Tragteil und die zweite Klemmbacke 4 über die erste Klemmbacke 3 mittelbar an dem Tragteil befestigt sein.

Der Aufnahmeraum 18 für das Flächenelement 2 ist in einem Klemmabschnitt 20 der Klemmvorrichtung 1 zwischen den beiden Klemmbacken 3, 4 begrenzt. Der Klemmabschnitt 20 ist entlang einer Längsachse L der Klemmvorrichtung 1 benachbart zum Verbindungsabschnitt 5 angeordnet. Die Längsachse L ist parallel zur Raumachse X ausgerichtet.

In dem Klemmabschnitt 20 zwischen den beiden Klemmbacken 3, 4 sind zwei Einlageelemente 21, 22 angeordnet. Die beiden Einlageelemente 21, 22 sind identisch ausgebildet. Jeder der beiden Klemmbacken 3, 4 ist jeweils eine der beiden Einlageelemente 21, 22 zugeordnet. Zur Aufnahme des zugeordneten Einlageelementes 21, 22 weist jede der beiden Klemmbacken 3, 4 an deren einander zugewandten Innenseiten jeweils eine Aufnahmekontur 23, 24 auf. Die beiden Aufnahmekonturen 23, 24 sind flächensymmetrisch zu einer Mittelebene E ausgebildet, die im gehaltenen Zustand des Flächenelementes 2 parallel zur Plattenebene F ausgerichtet ist. Die Mittelebene E verläuft orthogonal zur Klemmachse S.

Die jeweilige Aufnahmekontur 23, 24 weist einen mit Aussparungen 25, 26 versehenen Abschnitt 27 und einen flächig geschlossenen Abschnitt 28 auf. Der Abschnitt 27 ist, hier, entlang der Längsachse L zwischen dem Sockel 6 und dem Abschnitt 28 angeordnet. Möglich wäre aber auch eine umgekehrte Reihenfolge, bei der der Abschnitt 28 mittig zwischen dem Sockel 6 und dem Abschnitt 27 angeordnet ist.

Die bodenseitig geschlossenen Aussparungen 25, 26 erstrecken sich in einer Richtung weg von der jeweils gegenüberliegenden Klemmbacke 3, 4 in die jeweilige Klemmbacke 3, 4 hinein. Die beiden außenliegenden Aussparungen 25 im Abschnitt 27 sind als Längsnuten ausgebildet, die sich parallel zur Längsachse L erstrecken. Die außenliegenden Aussparungen 25 sind von den beiden weiter innenliegenden Aussparungen 26 durch Stege 29 getrennt. Die innenliegenden Aussparungen 26 sind im Wesentlichen ebenfalls als sich parallel zur Längsachse L erstreckende Längsnuten ausgebildet, die an dem zum Sockel 6 weisenden Enden von einer zentral angeordneten Erhebung 30 unterbrochen sind. Die Erhebung 30 weist einen kreisförmigen Abschnitt auf, dessen Außenradius dem Außenradius einer im Abschnitt 28 ausgebildeten weiteren Erhebung 31 entspricht. Die beiden innenliegenden Aussparungen 26 sind zwischen der Erhebung 30 und dem angrenzenden flächig geschlossenen Abschnitt 28 durch einen Steg 32 voneinander getrennt. Die Stege 29, 32 erstrecken sich parallel zur Längsachse L. Die Stege 29, 32 weisen Stegoberflächen 33 auf, die gemeinsam mit der Oberfläche des flächig geschlossenen Abschnitts 28 eine Stützfläche A bilden. Die Stützfläche A liegt in einer Ebene, die parallel zu einer von den beiden Raumachsen X, Y aufgespannten Ebene ist. Die Stützfläche A kann auch als Stützebene bezeichnet werden. An der Stützfläche A der jeweiligen Klemmbacke 3, 4 stützt sich das zugeordnete Einlageelement 21, 22 flächig ab.

Zur einfacheren Ausrichtung des jeweiligen Einlageelementes 21, 22 an der zugeordneten Klemmbacke 3, 4 kann die jeweilige Aufnahmekontur 23, 24 einen zentralen insbesondere stiftartigen Vorsprung 34 aufweisen, der mit einer Bohrung 35 im jeweiligen Einlageelement 21, 22 fluchtet. Die Mittelpunkte der beiden Erhebungen 30, 31 und des zentralen Vorsprunges 34 sind auf einer gemeinsamen gerade angeordnet, die parallel zur Längsachse L verläuft.

In den Figuren 1 und Figur 5 ist erkennbar, dass die Einlageelemente 21, 22 die Aufnahmekonturen 23, 24 zumindest im Wesentlichen vollständig überdecken. Lediglich an den beiden Erhebungen 30, 31 und dem stiftartigen Vorsprung 34 sind die Einlageelemente 21, 22 ausgespart. Die beiden identisch ausgestalteten Einlageelemente 21, 22 sind jeweils integral als monolithische Einheit ausgebildet. Die Einlageelemente 21, 22 können aus einem elastomeren Material, beispielsweise einem Gummi, sein. Zum Beispiel können die beiden Einlageelemente 21, 22 aus insbesondere Gummi hergestellte Formteile sein.

Durch Wenden zumindest eines der beiden Einlageelemente 21, 22 um eine Wendeachse W kann der Abstand zwischen den beiden Einlageelementen 21, 22 verändert werden. Auf diese Weise ist die Klemmvorrichtung 1 geeignet, um Flächenelemente 2 unterschiedlicher Materialstärken einspannen zu können. Hierzu kann das jeweilige Einlageelement 21, 22 in der zugeordneten Aufnahmekontur 23, 24 in einer ersten Aufnahmeposition oder in einer zweiten Aufnahmeposition aufgenommen sein, wobei sich jeweils unterschiedliche Abstände zwischen den beiden Einlageelementen 21, 22 ergeben. Dadurch, dass die beiden Einlageelemente 21, 22 zudem unabhängig voneinander in deren jeweilige Aufnahmepositionen überführbar sind, können mit der Klemmvorrichtung 1 insgesamt drei verschiedene Abstände zwischen den beiden Einlageelementen 21, 22 eingestellt werden.

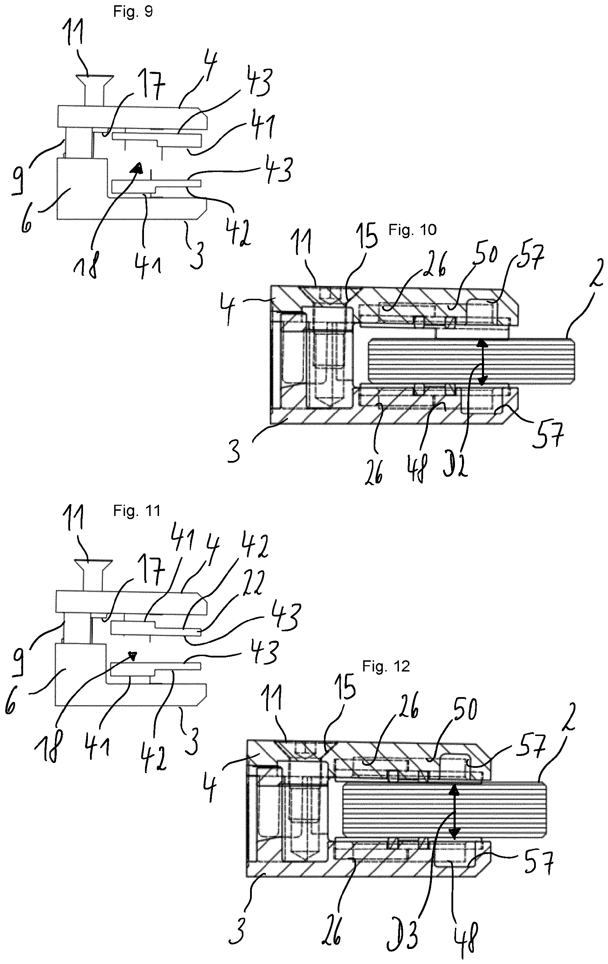

In den Figuren 5 bis 8 ist die Klemmvorrichtung 1 in einem ersten Einbauzustand gezeigt, in dem die beiden Einlageelemente 21, 22 jeweils in der ersten Aufnahmeposition aufgenommen sind, sodass zwischen den beiden Einlageelementen 21, 22 ein erster Abstand D1 gebildet ist. In den Figuren 9 und 10 ist die Klemmvorrichtung 1 in einem zweiten Einbauzustand gezeigt, in dem das der ersten Klemmbacke 3 zugeordnete Einlageelement 21 in der ersten Aufnahmeposition und das der zweiten Klemmbacke 4 zugeordnete Einlageelement 22 in der zweiten Aufnahmeposition aufgenommen ist, sodass zwischen den beiden Einlageelementen 21, 22 ein zweiter Abstand D2 gebildet ist. In den Figuren 11 und 12 ist die Klemmvorrichtung 1 in einem dritten Einbauzustand gezeigt, in dem die beiden Einlageelemente 21, 22 jeweils in der zweiten Aufnahmeposition aufgenommen sind, sodass zwischen den beiden Einlageelementen 21, 22 ein dritter Abstand D3 gebildet ist. Dabei gilt, dass Abstand D1 kleiner ist als Abstand D2 und Abstand D2 kleiner ist als Abstand D3, das heißt D1 < D2 < D3. Somit kann die Klemmvorrichtung 1 im ersten Einbauzustand ein Flächenelement 2 mit einer ersten Materialstärke von beispielsweise 6 Millimetern, im zweiten Einbauzustand ein anderes Flächenelement 2 mit einer zweiten Materialstärke von beispielsweise 10 Millimetern und im dritten Einbauzustand ein wiederum anderes Flächenelement 2 mit einer dritten Materialstärke von beispielsweise 12 Millimetern einspannen.

In der Figur 1 ist erkennbar, dass das Einlageelement 21, 22 eine gestuft ausgebildete erste Außenseite 36 und eine von der ersten Außenseite 36 abgewandte zweite Außenseite 37. Die erste Außenseite 36 des jeweiligen Einlageelementes 21, 22 weist, hier, zwei außenliegende Vorsprünge 38 und zwei innenliegende Vorsprünge 39 auf, die in der zweiten Aufnahmeposition des jeweiligen Einlageelementes 21, 22 formschlüssig in die Aussparungen 25, 26 der zugeordneten Klemmbacke 3, 4 ragen. Die beiden innenliegenden Vorsprünge 39 des jeweiligen Einlageelementes 21, 22 weisen zu den Erhebungen 30, 31 der jeweiligen Klemmbacke 3, 4 gegengleich ausgebildete Aussparung 58, 59 auf. Die Vorsprünge 38, 39 sind jeweils durch Längsrillen 40 zur Aufnahme der Stege 29, 32 unterbrochen. Die Tiefe der Längsrillen 40 entspricht, hier, zumindest im Wesentlichen der Tiefe der Aussparungen 25, 26 in der jeweiligen Aufnahmekontur 23, 24.

Die Vorsprünge 38,39 bilden gemeinsam eine Stufe auf der ersten Außenseite 36 des jeweiligen Einlageelementes 21,22. Die senkrecht zur Klemmachse S ausgerichtete Stufenoberfläche bildet eine erste Anlagefläche 41 des jeweiligen Einlageelementes 21, 22, die in der ersten Aufnahmeposition des jeweiligen Einlageelementes 21, 22 der jeweils gegenüberliegend angeordneten Klemmbacke 3, 4 zugewandt und damit mit dem zu haltenden Flächenelement 2 in Anlage bringbar ist. Die Anlagefläche 41 erstreckt sich über die Vorsprünge 38, 39 und ist durch die Längsrillen 40 unterbrochen. Das jeweilige Einlageelement 21, 22 weist weiterhin eine gegenüber der ersten Anlagefläche 41 axial zurückgestellte Grundfläche 42 auf. Die jeweilige Grundfläche 42 ist senkrecht zur Klemmachse S ausgerichtet. In der zweiten Aufnahmeposition des jeweiligen Einlageelementes 21, 22 liegt die jeweilige Grundfläche 42 flächig an der Stützfläche A der zugeordneten Klemmbacke 3, 4 an und stützt sich an deren flächig geschlossenem Abschnitt 28 ab.

Die zweite Außenseite 37 des jeweiligen Einlageelementes 21, 22 ist eben ausgebildet und senkrecht zur Klemmachse S ausgerichtet. Die jeweilige zweite Außenseite 37 weist jeweils eine zweite Anlagefläche 43 auf, die sich über die gesamte Oberfläche der zweiten Außenseite 37 erstreckt. In der ersten Aufnahmeposition des jeweiligen Einlageelementes 21, 22 liegt die zweite Anlagefläche 43 flächig an der Stützfläche A der zugeordneten Klemmbacke 3, 4 an und stützt sich an den Stegoberflächen 33 und an der Oberfläche des flächig geschlossen Abschnitts 28 ab. In der zweiten Aufnahmeposition des jeweiligen Einlageelementes 21, 22 ist die zweite Anlagefläche 43 der jeweils gegenüberliegend angeordneten Klemmbacke 3, 4 zugewandt und damit mit dem zu haltenden Flächenelement 2 in Anlage bringbar.

Die erste Anlagefläche 41 ist kleiner als die zweite Anlagefläche 43. Allerdings gilt, dass jede der zwei Anlageflächen 41, 43 mindestens 25 Prozent der Summe der zwei Anlageflächen 41, 43 des jeweiligen Einlageelementes 21, 22 beträgt. Bei den in den Figuren 1 bis 12 gezeigten Einlageelementen 21, 22 erstreckt sich die erste Anlagefläche 41 über zumindest ein Drittel der Oberfläche der ersten Außenseite 36 des jeweiligen Einlageelementes 21, 22.

Weiterhin weist das jeweilige Einlageelement 21, 22 zwei voneinander abgewandte Seitenflächen 44 auf, die parallel zur Klemmachse S verlaufen. Die beiden Seitenflächen 44 sind zu der Wendeachse W achssymmetrisch ausgebildet. Somit ist das jeweilige Einlageelement 21, 22 in der ersten Aufnahmeposition mit der ersten Anlagefläche 41 des jeweiligen Einlageelementes 21, 22 der jeweils gegenüberliegenden Klemmbacke 3, 4 zugewandt und, nach Wenden um die Wendeachse W, in der zweiten Aufnahmeposition mit der zweiten Anlagefläche 43 der jeweils gegenüberliegenden Klemmbacke 3, 4 zugewandt ist. Die Wendeachse W ist, hier, parallel zur Raumachse Y ausgerichtet, sodass die Wendeachse W senkrecht zur Klemmachse S und senkrecht zur Längsachse L verläuft. Grundsätzlich denkbar und möglich wäre auch, die Aufnahmekonturen 23, 24 und die Einlageelemente 21, 22 derart auszugestalten, dass die Wendeachse W senkrecht zur Klemmachse S und parallel zur Längsachse L verläuft.

Die in Umfangsrichtung um die Klemmachse S verlaufende Einhüllende des jeweiligen Einlageelementes 21, 22 weist eine zum Außenrand der jeweiligen Aufnahmekontur 23, 24 gegengleiche Außenkontur auf. Die Einhüllende umfasst die beiden Seitenflächen 44 des jeweiligen Einlageelementes 21, 22. Damit liegt das jeweilige Einlageelement 21, 22 in der zugeordneten Klemmbacke 3, 4 seitlich spielfrei an einem die jeweilige Aufnahmekontur 23, 24 umgebenden Randbereich 45 an. Die Stützfläche A der jeweiligen Klemmbacke 3, 4 ist gegenüber der senkrecht zur Klemmachse S ausgerichteten Randoberfläche des jeweiligen Randbereiches 45 zurückgesetzt.

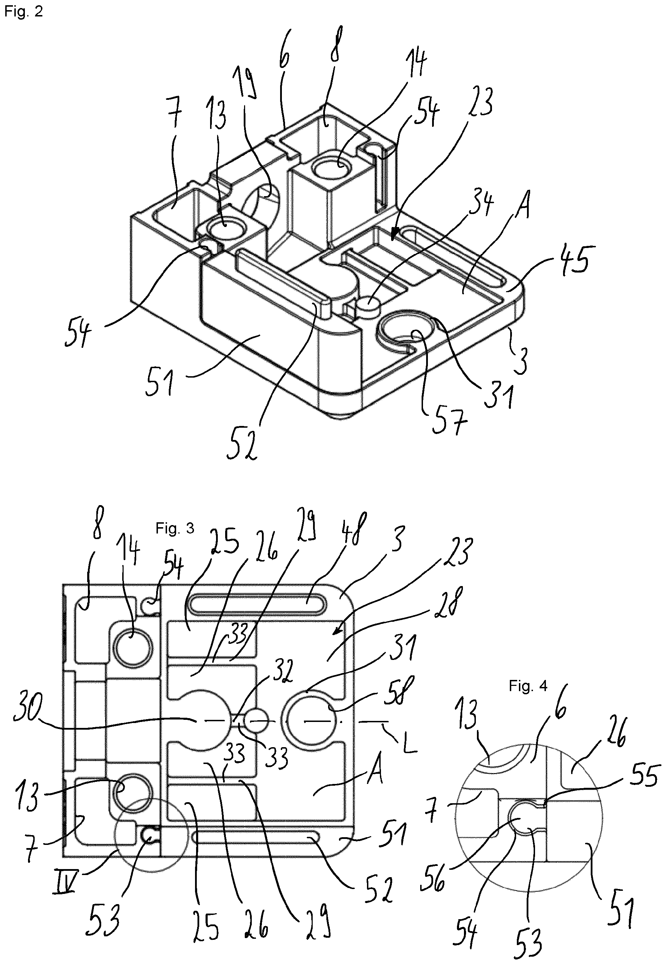

In den Randbereichen 45 der beiden Klemmbacken 3, 4 sind jeweils zwei Nuten 47, 48, 49, 50 ausgebildet. Die Nuten 47, 48, 49, 50 sind als Längsnuten ausgebildet und erstrecken sich parallel zur Längsachse L. Jeweils eine der beiden Nuten 47, 48 der ersten Klemmbacke 3 fluchtet mit jeweils einer der beiden Nuten 49, 50 der zweiten Klemmbacke 4, sodass die übereinanderliegend angeordneten Nuten 47, 49 ein erstes Nutenpaar und die übereinanderliegend angeordneten Nuten 48, 50 ein zweites Nutenpaar bilden. Weiterhin weist die Klemmvorrichtung 1 ein steckbares Wandelement 51 auf. Das Wandelement 51 weist zwei Stege 52 auf, die an zwei voneinander abgewandten Außenseiten des Wandelementes 51, die den Randbereichen der beiden Klemmbacken 3, 4 zugewandt sind, angeordnet sind. An einer dem Sockel 6 zugewandten Stirnseite des Wandelementes 51 weist dieses eine sich parallel zur Klemmachse S erstreckende Feder 53 auf. Weiterhin weist der Sockel 6 zwei Schlitze 54 auf, die sich parallel zur Klemmachse S erstrecken. Durch Wenden des Wandelementes 51 um die Raumachse X kann dieses wahlweise in eines der beiden Nutenpaare 47, 49, 48, 50 eingesteckt werden. Hierzu wird das steckbare Wandelement 51 bei Montage der Klemmvorrichtung 1, wenn die zweite Klemmbacke 4 von der ersten Klemmbacke 3 getrennt ist, von oben, das heißt in Richtung der Körperachse Z, eingesteckt. In den Figuren 2 bis 4 ist erkennbar, dass hierbei die Feder 53 des Wandelementes 51 in einen der beiden Schlitze 54 von oben eingeschoben wird. Anschließend kann die zweite Klemmbacke 4 mit der ersten Klemmbacke 3 verbunden und die Spannelemente 11, 12 fest gezogen werden. In dem in der Figur 4 vergrößerten Teilausschnitt, der das in der Figur 3 mit dem Kreis IV umkreiste Detail zeigt, ist gut erkennbar, dass die Feder 53 des Wandelementes 51 eine parallel zur Klemmachse S verlaufende Hinterschneidung 55 aufweist, an die sich ein aufgeweitetes Ende 56 anschließt. Das aufgeweitete Ende 56 der Feder 53 ist in dem Schlitz 54 angeordnet. Die Feder 53 und der jeweilige Schlitz 54 kann beispielsweise eine Schwalbenschwanz-Verbindung bilden. Zur Verdeutlichung der Funktionsweise des Wandelementes 51 sowie des Aufbaus der jeweiligen Aufnahmekontur 23, 24 ist in den Figuren 2 bis 4 nur eine Teildarstellung der Klemmvorrichtung 1 wiedergegeben. Insbesondere sind in den Figuren 2 bis 4 die zweite Klemmbacke 4 und die Einlageelemente 21, 22 nicht gezeigt. Ein solcher Zustand kann sich bei Montage der Klemmvorrichtung 1 ergeben.

In den in den beiden Klemmbacken 3, 4 ausgebildeten Erhebungen 31 können Bohrungen 57 ausgebildet sein, um Sicherungsstifte (nicht gezeigt) aufnehmen zu können. Die Sicherungsstifte können zur zusätzlichen Sicherung des zu haltenden Flächenelementes 2 in die Bohrungen 57 eingesetzt sein und greifen durch die Aussparungen 58, 59 durch das jeweilige Einlageelement 21, 22 in entsprechende Aussparungen in dem Flächenelement 2 hinein.

Durch Verändern der Aufnahmepositionen der jeweiligen Einlageelemente 21, 22 können somit drei verschiedene Abstände D1, D2, D3 zwischen den beiden Einlageelementen 21, 22 vorgegeben werden. Die beiden Klemmbacken 3, 4 können vorzugsweise aufgrund der Anschläge 17 nicht weiter aufeinander zu bewegt werden.

Im ersten Einbauzustand, der in den Figuren 5 bis 8 gezeigt ist, befinden sich die beiden Einlageelemente 21, 22 jeweils in der ersten Aufnahmeposition. Dabei stehen die beiden ersten Anlageflächen 41, bezogen auf die Klemmachse S, axial über den Randbereich 45 der jeweiligen Klemmbacke 3, 4 vor, sodass die ersten Anlageflächen 41 mit dem zu haltenden Flächenelement 2 in Anlage bringbar sind. Der Abstand D1 zwischen den beiden ersten Anlageflächen 41 begrenzt den Aufnahmeraum 18 axial. In der Figur 5 ist das zu haltende Flächenelement 2 lediglich zur Verdeutlichung der Funktionsweise der Klemmvorrichtung 1 im gehaltenen Zustand gezeigt. Erkennbar ist, dass das Flächenelement 2 im gehaltenen Zustand gleichbeabstandet zu den beiden Klemmbacken 3, 4 gehalten ist, wenn sich die beiden Einlageelemente 21, 22 jeweils in der ersten Aufnahmeposition befinden. Über die beiden zweiten Anlageflächen 43 stützen sich die Einlageelemente 21, 22 an den zugeordneten Klemmbacken 3, 4 ab, wobei die zweiten Anlageflächen 43 flächig an den Stützflächen A anliegen.

Im zweiten Einbauzustand, der in den Figuren 9 und 10 gezeigt ist, befindet sich eines der beiden Einlageelemente 21 in der zweiten Aufnahmeposition und ein anderes der beiden Einlageelemente 22 in der ersten Aufnahmeposition. Dabei sind die, hier, der ersten Klemmbacke 3 zugeordneten Vorsprünge 38, 39 des einen Einlageelementes 21 in den Aussparungen 25, 26 angeordnet. Hierzu ist, hier, das der ersten Klemmbacke 3 zugeordnete Einlageelement 21, gegenüber dem ersten Einbauzustand, um die Wendeachse W gewendet. Grundsätzlich möglich wäre auch, zur Einnahme des zweiten Einbauzustandes das der zweiten Klemmbacke 4 zugeordnete Einlageelement 22 um die Wendeachse W zu wenden. Das gewendete Einlageelemente 21 stützt sich über die Grundfläche 42 und die zwischen den Vorsprüngen 38, 39 gebildeten Rillenböden 46 der Längsrillen 40 an der sich über die Abschnitte 27, 28 der Aufnahmekontur 23 erstreckende Stützfläche A der ersten Klemmbacke 3 ab. Die zweite Anlagefläche 43 des der ersten Klemmbacke 3 zugeordneten Einlageelementes 21 ist der gegenüberliegend angeordneten zweiten Klemmbacke 4 zugewandt. Dagegen ist die erste Anlagefläche 41 des der zweiten Klemmbacke 4 zugeordneten Einlageelementes 22 wiederum der ersten Klemmbacke 3 zugewandt. Somit steht die erste Anlagefläche 41 des Einlageelementes 22 und die zweite Anlagefläche 43 des Einlageelementes 21, bezogen auf die Klemmachse S, axial über den Randbereich 45 der jeweiligen Klemmbacke 3, 4 vor, um die genannten Anlageflächen 41, 43 mit dem zu haltenden Flächenelement 2 in Anlage bringen zu können. Damit ergibt sich im zweiten Einbauzustand ein gegenüber dem ersten Einbauzustand vergrößerter Abstand, der durch den Abstand D2 zwischen der ersten Anlagefläche 41 des der zweiten Klemmbacke 4 zugeordneten Einlageelementes 22 und der zweiten Anlagefläche 43 des der ersten Klemmbacke 3 zugeordneten Einlageelemente 21 gebildet ist. In der Figur 10 ist erkennbar, dass das Flächenelement 2 im gehaltenen Zustand näher an derjenigen Klemmbacke 3 gehalten ist, deren zugeordnetes Einlageelement 21 sich in der zweiten Aufnahmeposition befindet.

Im dritten Einbauzustand, der in den Figuren 11 und 12 gezeigt ist, befinden sich die beiden Einlageelemente 21, 22 jeweils in der zweiten Aufnahmeposition. Dabei sind die beiden Einlageelemente 21, 22, gegenüber dem ersten Einbauzustand, um die Wendeachse W gewendet. Die beiden zweiten Anlageflächen 43 stehen, bezogen auf die Klemmachse S, axial über den Randbereich 45 der jeweiligen Klemmbacke 3, 4 vor, sodass die zweiten Anlageflächen 43 mit dem zu haltenden Flächenelement 2 in Anlage bringbar sind. Damit ergibt sich im dritten Einbauzustand ein gegenüber dem zweiten Einbauzustand vergrößerter Abstand, der durch den Abstand D3 zwischen den beiden einander zugewandten zweiten Anlageflächen 43 der beiden Einlageelemente 22 gebildet ist. In der Figur 12 ist erkennbar, dass das Flächenelement 2 im gehaltenen Zustand gleichbeabstandet zu den beiden Klemmbacken 3, 4 gehalten ist, wenn sich die beiden Einlageelemente 21, 22 jeweils in der zweiten Aufnahmeposition befinden.

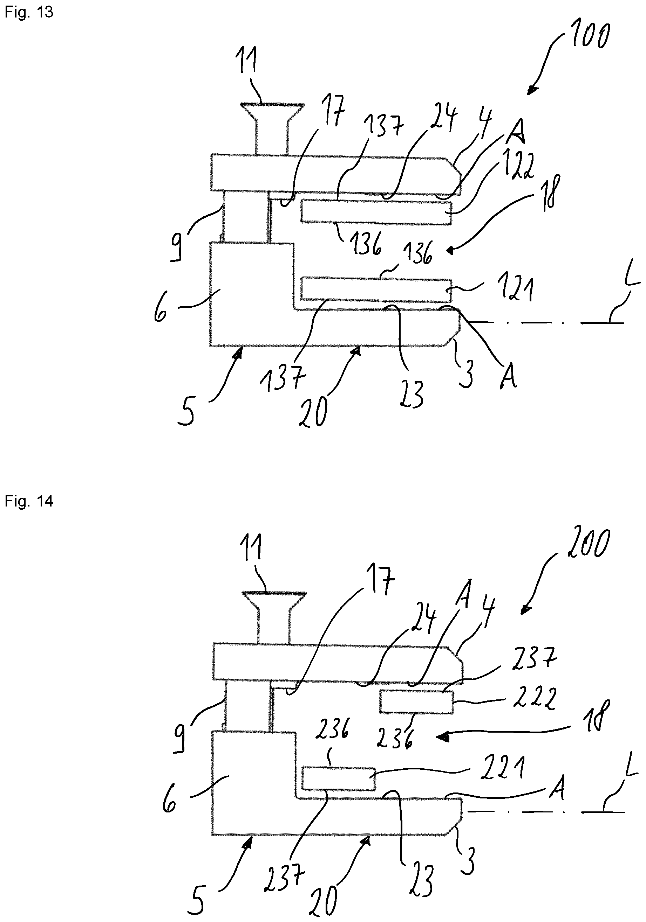

In Figur 13 ist eine Klemmvorrichtung 100 gemäß einer zweiten Ausführungsform der vorliegenden Erfindung gezeigt, die derjenigen aus den Figuren 1 bis 12 weitestgehend entspricht, sodass hinsichtlich der Gemeinsamkeiten auf die obige Beschreibung Bezug genommen wird. Dabei sind gleiche beziehungsweise abgewandelte Einzelheiten mit den gleichen Bezugszeichen versehen, wie in den Figuren 1 bis 12. Der Unterschied besteht in der Ausgestaltung der Aufnahmekonturen der beiden Klemmbacken 3, 4 und der Ausgestaltung der Einlageelemente 121, 122. Die Einlageelemente 121, 122 können quaderförmig gestaltet sein und weisen Längsrillen auf, die sich ausgehend von der ersten Außenseite 136 und der zweiten Außenseite 137 in das jeweilige Einlageelement 121, 122 erstrecken. Die Längsrillen auf der ersten Außenseite 136 sind dabei tiefer gestaltet als die Längsrillen auf der zweiten Außenseite 137. Die Aufnahmekonturen der beiden Klemmbacken 3, 4 weisen als Längsnuten ausgebildete Vertiefungen aus, die sich über die gesamte Länge der Aufnahmekonturen erstrecken und durch Stege voneinander räumlich getrennt sind. Die Einlageelemente 121, 122 sind um die Wendeachse W wendbar. Dabei können die Längsrillen auch durch Querrillen durchgekreuzt sein, sodass sich eine gitterartige Struktur ergeben würde. Die Aufnahmekonturen der beiden Klemmbacken 3, 4 könnten analog dazu ausgebildete Querstege aufweisen.

In der ersten Aufnahmeposition sind die zweiten Außenseiten 137 den Klemmbacken 3, 4 zugewandt. In der ersten Aufnahmeposition werden die Einlageelemente 121, 122 somit auf die Stege bis zum Anschlag der Stegoberflächen an den Rillenböden der auf der zweiten Außenseite 137 ausgebildeten Längsrillen gedrückt. Somit gibt die Tiefe dieser Längsrillen den Abstand zwischen den beiden Einlageelementen 121, 122 vor. Die Einlageelemente 121, 122 stützen sich dann mit den Rillenböden an der Stützfläche A der zugeordneten Klemmbacke 3, 4 ab. Die ersten Außenseiten 136 sind in der ersten Aufnahmeposition der jeweils gegenüberliegenden Klemmbacke 3, 4 zugewandt und bilden, hier, mit deren gesamten Oberflächen die mit dem zu haltenden Flächenelement 2 in Anlage bringbaren zweiten Anlageflächen. Zur seitlichen Stabilisierung der Einlageelemente 121, 122 in deren Aufnahmepositionen können die Aufnahmekonturen 23, 24 ebenfalls von dem Randbereich 45, wie in Zusammenhang mit der Ausführungsform gemäß den Figuren 1 bis 12 gezeigt, umgeben sein.

In der zweiten Aufnahmeposition sind die ersten Außenseiten 136 der jeweils zugeordneten Klemmbacke 3, 4 zugewandt. In der zweiten Aufnahmeposition werden die Einlageelemente 121, 122 somit auf die Stege bis zum Anschlag der Stegoberflächen an den Rillenböden der auf der ersten Außenseite 136 ausgebildeten Längsrillen gedrückt. Somit gibt die Tiefe dieser Längsrillen den Abstand zwischen den beiden Einlageelementen vor 121, 122. Die Einlageelemente 121, 122 stützen sich dann mit den Rillenböden an der Stützfläche A der zugeordneten Klemmbacke 3, 4 ab. Die zweiten Außenseiten 136 sind in der zweiten Aufnahmeposition der jeweils gegenüberliegenden Klemmbacke 3, 4 zugewandt und bilden, hier, mit deren gesamten Oberflächen die mit dem zu haltenden Flächenelement 2 in Anlage bringbaren zweiten Anlageflächen.

Entsprechend ist der Abstand zwischen den beiden Einlageelementen 121, 122 in der ersten Aufnahmeposition kleiner als in der zweiten Aufnahmeposition. Analog zu der im Zusammenhang mit den Figuren 1 bis 12 beschriebenen Ausführungsform können damit auch mit der in der Figur 13 gezeigten Ausführungsform durch wahlweises Wenden zumindest eines der beiden Einlageelemente 121, 122 drei verschiedene Abstände zwischen den beiden Einlageelementen 121, 122 eingestellt werden.

In Figur 14 ist eine Klemmvorrichtung 200 gemäß einer dritten Ausführungsform der vorliegenden Erfindung gezeigt, die derjenigen aus den Figuren 1 bis 12 weitestgehend entspricht, sodass hinsichtlich der Gemeinsamkeiten auf die obige Beschreibung Bezug genommen wird. Dabei sind gleiche beziehungsweise abgewandelte Einzelheiten mit den gleichen Bezugszeichen versehen, wie in den Figuren 1 bis 12. Der Unterschied besteht in der Ausgestaltung der Aufnahmekonturen der beiden Klemmbacken 3, 4 und der Ausgestaltung der Einlageelemente 221, 222.

Im Unterschied zu den vorgenannten Einlageelementen 21, 22, die durch Wenden um deren Wendeachse W in die beiden Aufnahmepositionen überführt werden, wird die Aufnahmeposition des jeweiligen Einlageelementes 221, 222 durch axiales Verlagern entlang der Längsachse L relativ zu den Klemmbacken 3, 4 verändert. Dabei ist das jeweilige Einlageelement 221, 222 in der zweiten Aufnahmeposition zumindest teilweise in zumindest einer Aussparung der Aufnahmekontur 23, 24 der zugeordneten Klemmbacke 3, 4 angeordnet, die gegenüber der Stützfläche A zurückgesetzt ist. Dadurch wird das jeweilige Einlageelement 221, 222 in seiner zweiten Aufnahmeposition von dem gegenüberliegenden Einlageelement 221, 222 in Bezug auf die Klemmachse S axial weiter wegbewegt, sodass sich der Abstand in der zweiten Aufnahmeposition zwischen den beiden Einlageelementen 221, 222 vergrößert. Durch wahlweises Verlagern zumindest eines der beiden Einlageelemente 221, 222 können somit ebenfalls drei verschiedene Abstände zwischen den beiden Einlageelementen 221, 222 eingestellt werden. Entsprechend ist stets eine der beiden Außenseiten 236 der jeweils gegenüberliegend angeordneten Klemmbacke 3, 4 zugewandt und bilden, hier, mit deren gesamten Oberflächen die mit dem zu haltenden Flächenelement 2 in Anlage bringbaren zweiten Anlageflächen. Die von der einen Außenseite 236 abgewandte andere Außenseite 237 ist stets der zugeordneten Klemmbacke 3, 4 zugewandt und liegt an der Stützfläche A flächig an.

Zur seitlichen Stabilisierung der Einlageelemente 221, 222 in deren Aufnahmepositionen können die Aufnahmekonturen 23, 24 ebenfalls von dem Randbereich 45, wie in Zusammenhang mit der Ausführungsform gemäß den Figuren 1 bis 12 gezeigt, umgeben sein.

## Patentansprüche

1. Klemmvorrichtung (1; 100; 200) für ein Flächenelement (2), mit einem Verbindungsabschnitt (5) und einem entlang einer Längsachse (L) der Klemmvorrichtung (1; 100; 200) benachbart zum Verbindungsabschnitt (5) angeordneten Klemmabschnitt (20), wobei die Klemmvorrichtung (1; 100; 200) weiterhin umfasst:
zwei Klemmbacken (3, 4), die im Verbindungsabschnitt (5) relativ zueinander entlang einer Klemmachse (S) bewegbar miteinander verbunden sind und im Klemmabschnitt (20) zwischen sich einen Aufnahmeraum (18) für das Flächenelement (2) begrenzen, und
zwei im Klemmabschnitt (20) zwischen den beiden Klemmbacken (3, 4) angeordnete Einlageelemente (21, 22; 121, 122; 221, 222), wobei den beiden Klemmbacken (3, 4) jeweils eines der beiden Einlageelemente (21, 22; 121, 122; 221, 222) zugeordnet ist, wobei die Einlageelemente (21, 22; 121, 122; 221, 222) jeweils zwei Anlageflächen (41, 43) aufweisen, von denen eine der beiden Anlageflächen (41, 43) mit der zugeordneten Klemmbacke (3, 4) in Anlage ist und eine andere der beiden Anlageflächen (41, 43) mit dem Flächenelement (2) in Anlage bringbar ist,
wobei jede der zwei Anlageflächen (41, 43) mindestens 25 Prozent der Summe der zwei Anlageflächen (41, 43) des jeweiligen Einlageelementes (21, 22; 121, 122; 221, 222) beträgt,
wobei
zumindest eine der beiden Klemmbacken (3, 4) eine Aufnahmekontur (23, 24) aufweist, in welcher das zugeordnete Einlageelement (21, 22; 121, 122; 221, 222) in einer ersten Aufnahmeposition, in der zwischen den beiden Einlageelementen (21, 22; 121, 122; 221, 222) ein erster Abstand (D1; D2) gebildet ist, oder in einer zweiten Aufnahmeposition, in der zwischen den beiden Einlageelementen (21, 22; 121, 122; 221, 222) ein zweiter Abstand (D2; D3) gebildet ist, der ungleich dem ersten Abstand (D1; D2) ist, aufgenommen ist,
**dadurch gekennzeichnet,**
- **dass** das jeweilige Einlageelement (21, 22; 121, 122) um eine Wendeachse wendbar ausgebildet ist, sodass das jeweilige Einlageelement (21, 22; 121, 122) in der ersten Aufnahmeposition mit einer ersten Anlagefläche (41) der beiden Anlageflächen (41, 43) mit dem zu haltenden Flächenelement (2) in Anlage bringbar ist und in der zweiten Aufnahmeposition mit einer zweiten Anlagefläche (43) der beiden Anlageflächen (41, 43) mit dem zu haltenden Flächenelement (2) in Anlage bringbar ist,
und/oder
- **dass** die erste Aufnahmeposition und die zweite Aufnahmeposition des jeweiligen Einlageelementes (221, 222) entlang der Längsachse (L) nebeneinander angeordnet sind, sodass der Abstand zwischen den beiden Einlageelementen (221, 222) durch Versetzen des jeweiligen Einlageelementes (221, 222) entlang der Längsachse (L) in eine der beiden Aufnahmepositionen verändert werden kann.

2. Klemmvorrichtung (1; 100) nach Anspruch 1, **dadurch gekennzeichnet, dass** das jeweilige Einlageelement (21, 22; 121, 122) zwei voneinander abgewandte Seitenflächen (44) aufweist, die insbesondere parallel zur Klemmachse (S) ausgerichtet sind, wobei die beiden Seitenflächen (44) zu einer Wendeachse (W) achssymmetrisch ausgebildet sind, sodass durch Wenden des jeweiligen Einlageelementes (21, 22; 121, 122) um die Wendeachse (W) in der ersten Aufnahmeposition die erste Anlagefläche (41) des jeweiligen Einlageelementes (21, 22; 121, 122) der gegenüberliegenden Klemmbacke (3, 4) zugewandt ist und in der zweiten Aufnahmeposition die zweite Anlagefläche (43) des jeweiligen Einlageelementes (21, 22; 121, 122) der gegenüberliegenden Klemmbacke (3, 4) zugewandt ist.

3. Klemmvorrichtung (1; 100) nach Anspruch 2, **dadurch gekennzeichnet, dass** die Wendeachse (W) senkrecht zur Klemmachse (S) und/oder senkrecht zur Längsachse (L) ausgerichtet ist.

4. Klemmvorrichtung (1; 100) nach Anspruch 2 oder 3, **dadurch gekennzeichnet, dass** die erste Anlagefläche (41) des jeweiligen Einlageelementes (21, 22; 121, 122) kleiner als die zweite Anlagefläche (43) des jeweiligen Einlageelementes (21, 22; 121, 122) ist.

5. Klemmvorrichtung (1; 100) nach einem der Ansprüche 2 bis 4, **dadurch gekennzeichnet, dass** das jeweilige Einlageelement (21, 22; 121, 122) in der ersten Aufnahmeposition mit der zweiten Anlagefläche (43) und in der zweiten Aufnahmeposition mit einer gegenüber der ersten Anlagefläche (41) zurückgesetzten Grundfläche (42) an der Stützfläche (A) der zugeordneten Klemmbacke (3, 4) anliegt.

6. Klemmvorrichtung (1; 100) nach einem der Ansprüche 2 bis 5, **dadurch gekennzeichnet, dass** das jeweilige Einlageelement (21, 22; 121, 122) zumindest einen Vorsprung (38, 39) aufweist, der bei Anordnung des jeweiligen Einlageelementes (21, 22; 121, 122) in der zweiten Aufnahmeposition in die zumindest eine Aussparung (25, 26) der zugeordneten Klemmbacke (3, 4) ragt, wobei die erste Anlagefläche (41) an dem zumindest einen Vorsprung (38, 39) ausgebildet ist.

7. Klemmvorrichtung (1; 100) nach Anspruch 6, **dadurch gekennzeichnet, dass** der zumindest eine Vorsprung (38, 39) des jeweiligen Einlageelementes (21, 22; 121, 122) in der zweiten Aufnahmeposition formschlüssig in die zumindest eine Aussparung (25, 26) der zugeordneten Klemmbacke (3, 4) eingreift.

8. Klemmvorrichtung (1; 100) nach Anspruch 6 oder 7, **dadurch gekennzeichnet, dass** die wenigstens eine Aufnahmekontur (23, 24) der jeweiligen Klemmbacke (3, 4) mehrere der Aussparungen (25, 26) aufweist, die durch Stege (32) voneinander getrennt sind, wobei die Stege (32) Stegoberflächen (33) aufweisen, wobei die Stützfläche (A) der jeweiligen Klemmbacke (3, 4) die jeweiligen Stegoberflächen (33) umfasst, und dass das zugeordnete Einlageelement (21, 22; 121, 122) jeweils mehrere der Vorsprünge (38, 39) aufweist, die in der zweiten Aufnahmeposition des zugeordneten Einlageelementes (21, 22; 121, 122) in die Aussparungen (25, 26) der zugeordneten Klemmbacke (3, 4) ragen.

9. Klemmvorrichtung (1; 100) nach Anspruch 8, **dadurch gekennzeichnet, dass** eine die erste Anlagefläche (41) aufweisende erste Außenseite (36) des jeweiligen Einlageelementes (21, 22; 121, 122) die Vorsprünge (38, 39) aufweist, wobei die Vorsprünge (38, 39) gemeinsam eine Stufe bilden, die durch Längsrillen (40) unterbrochen sind.

10. Klemmvorrichtung (1) nach einem der Ansprüche 1 bis 9, **dadurch gekennzeichnet, dass** im Klemmabschnitt (20) an einander zugewandten Innenseiten der beiden Klemmbacken (3, 4) Randbereiche (45) mit Nuten (47, 48, 49, 50) ausgebildet sind, wobei jeweils eine der Nuten (47, 48) der einen Klemmbacke (3) mit einer der Nuten (49, 50) der gegenüberliegenden Klemmbacke (4) ein Nutenpaar bildet, und dass die Klemmvorrichtung (1) ein steckbares Wandelement (51) mit zwei Stegen (52) aufweist, die wahlweise in die Nuten (47, 48, 49, 50) eines der beiden Nutenpaare einsteckbar sind.

11. Klemmvorrichtung (1) nach Anspruch 10, **dadurch gekennzeichnet, dass** das Wandelement (51) an einer dem Verbindungsabschnitt (5) zugewandten Stirnseite eine Feder (53) aufweist, und dass in einer der beiden Klemmbacken (3) zwei Schlitze (54) ausgebildet sind, wobei die Feder (53) wahlweise in einen der beiden Schlitze (54) einschiebbar ist.

12. Klemmvorrichtung (1) nach Anspruch 11, **dadurch gekennzeichnet, dass** die Feder (53) eine parallel zur Klemmachse (S) verlaufende Hinterschneidung (55) bildet.

13. Klemmvorrichtung (1) nach einem der Ansprüche 10 bis 12, **dadurch gekennzeichnet, dass** die Stützfläche (A) der jeweiligen Klemmbacke (3, 4) gegenüber dem jeweiligen Randbereich (45) zurückgesetzt ist.

14. Geländeranordnung mit zumindest einem Tragteil, an dem zumindest eine Klemmvorrichtung (1; 100; 200) für ein Flächenelement (2) angeordnet ist, wobei die Klemmvorrichtung (1; 100; 200) nach einem der Ansprüche 1 bis 13 gestaltet ist.

## Claims

1. A clamping device (1; 100; 200) for a flat element (2), comprising a connecting portion (5) and a clamping portion (20) arranged along a longitudinal axis (L) of the clamping device (1; 100; 200) adjacent to the connecting portion (5), the clamping device (1; 100; 200) further comprising:
two clamping jaws (3, 4) which are connected to one another in the connecting portion (5) such that they can move relative to one another along a clamping axis (S) and which define between them in the clamping portion (20) a receiving space (18) for the flat element (2), and
two insert elements (21, 22; 121, 122; 221, 222) arranged in the clamping portion (20) between the two clamping jaws (3, 4), wherein one of the two insert elements (21, 22; 121, 122; 221, 222) is associated with each of the two clamping jaws (3, 4), wherein the insert elements (21, 22; 121, 122; 221, 222) each have two contact surfaces (41, 43), of which one of the two contact surfaces (41, 43) is in contact with the associated clamping jaw (3, 4) and the other one of the two contact surfaces (41, 43) can be brought into contact with the flat element (2),
wherein each of the two contact surfaces (41, 43) is at least 25 percent of the sum of the two contact surfaces (41, 43) of the respective insert element (21, 22; 121, 122; 221, 222),
wherein at least one of the two clamping jaws (3, 4) has a receiving contour (23, 24) in which the associated insert element (21, 22; 121, 122; 221, 222) is held in a first receiving position in which a first distance (D1; D2) is formed between the two insert elements (21, 22; 121, 122; 221, 222), or in a second receiving position in which a second distance (D2) is formed between the two insert elements (21, 22; 121, 122; 221, 222), the second distance (D2) being unequal to the first distance (D1; D2),
**characterised in**
- **that** the respective insert element (21, 22; 121, 122) is designed so as to be turnable about a turning axis, so that, in the first receiving position, the respective insert element (21, 22; 121, 122) with a first contact surface (41) of the two contact surfaces (41, 43) can be brought into contact with the flat element (2) to be held, and, in the second receiving position, with a second contact surface (43) of the two contact surfaces (41, 43) can be brought into contact with the flat element (2) to be held,
and/or
- **that** the first receiving position and the second receiving position of the respective insert element (221, 222) are arranged adjacent to each other along the longitudinal axis (L), so that the distance between the two insert elements (221, 222) can be changed by displacing the respective insert element (221, 222) along the longitudinal axis (L) into one of the two receiving positions.

2. Clamping device (1; 100) according to claim 1, **characterised in that** the respective insert element (21, 22; 121, 122) has two side surfaces (44) facing away from each other, which are arranged in particular parallel to the clamping axis (S), wherein the two side surfaces (44) are designed to be axially symmetrical with respect to a turning axis (W), so that by turning the respective insert element (21, 22; 121, 122) about the turning axis (W), in the first receiving position the first contact surface (41) of the respective insert element (21, 22; 121, 122) faces the opposite clamping jaw (3, 4), and, in the second receiving position the second contact surface (43) of the respective insert element (21, 22; 121, 122) faces the opposite clamping jaw (3, 4).

3. Clamping device (1; 100) according to claim 2, **characterised in that** the turning axis (W) is arranged perpendicular to the clamping axis (S) and/or perpendicular to the longitudinal axis (L).

4. Clamping device (1; 100) according to claim 2 or 3, **characterised in that** the first contact surface (41) of the respective insert element (21, 22; 121, 122) is smaller than the second contact surface (43) of the respective insert element (21, 22; 121, 122).

5. Clamping device (1; 100) according to any one of claims 2 to 4, **characterised in that** the respective insert element (21, 22; 121, 122) bears against the supporting surface (A) of the associated clamping jaw (3, 4) with the second bearing surface (43) in the first receiving position and with a base surface (42) set back relative to the first bearing surface (41) in the second receiving position.

6. Clamping device (1; 100) according to any one of claims 2 to 5, **characterised in that** the respective insert element (21, 22; 121, 122) has at least one projection (38, 39) which, when the respective insert element (21, 22; 121, 122) is arranged in the second receiving position, projects into the at least one recess (25, 26) of the associated clamping jaw (3, 4), with the first bearing surface (41) being formed on the at least one projection (38, 39).

7. Clamping device (1; 100) according to claim 6, **characterised in that** the at least one projection (38, 39) of the respective insert element (21, 22; 121, 122) engages form-fittingly into the at least one recess (25, 26) of the associated clamping jaw (3, 4) in the second receiving position.

8. Clamping device (1; 100) according to claim 6 or 7, **characterised in that** the at least one receiving contour (23, 24) of the respective clamping jaw (3, 4) has a plurality of the recesses (25, 26) which are separated from one another by webs (32), the webs (32) having web surfaces (33), the supporting surface (A) of the respective clamping jaw (3, 4) comprising the respective web surfaces (33), and **in that** the associated insert element (21, 22; 121, 122) has respectively a plurality of the projections (38, 39) which, in the second receiving position of the associated insert element (21, 22; 121, 122), project into the recesses (25, 26) of the associated clamping jaw (3, 4).

9. Clamping device (1; 100) according to claim 8, **characterised in that** a first outer side (36) of the respective insert element (21, 22; 121, 122), that comprises the first contact surface (41), comprises the projections (38, 39), wherein the projections (38, 39) together form a step interrupted by longitudinal grooves (40).

10. Clamping device (1) according to any one of claims 1 to 9, **characterised in that** edge regions (45) with grooves (47, 48, 49, 50) are formed in the clamping portion (20) on mutually facing inner sides of the two clamping jaws (3, 4), wherein one of the grooves (47, 48) of one clamping jaw (3) and one of the grooves (49, 50) of the opposite clamping jaw (4) respectively form a pair of grooves, and **in that** the clamping device (1) has a plug-in wall element (51) with two webs (52) which can be plugged selectively into the grooves (47, 48, 49, 50) of one of the two pairs of grooves.

11. Clamping device (1) according to claim 10, **characterised in that** the wall element (51) has a spring (53) on an end face facing the connecting portion (5), and **in that** two slots (54) are formed in one of the two clamping jaws (3), wherein the spring (53) is selectively insertable into one of the two slots (54).

12. Clamping device (1) according to claim 11, **characterised in that** the spring (53) forms an undercut (55) extending parallel to the clamping axis (S).

13. Clamping device (1) according to one of claims 10 to 12, **characterised in that** the support surface (A) of the respective clamping jaw (3, 4) is set back relative to the respective edge region (45).

14. Railing arrangement having at least one supporting part on which at least one clamping device (1; 100; 200) for a flat element (2) is arranged, wherein the clamping device (1; 100; 200) is designed according to any one of claims 1 to 13.

## Revendications

1. Dispositif de serrage (1 ; 100 ; 200) pour un élément plat (2), comprenant une section d'assemblage (5) et une section de serrage (20) disposée de façon adjacente à la section d'assemblage (5) le long d'un axe longitudinal (L) du dispositif de serrage (1 ; 100 ; 200), le dispositif de serrage (1 ; 100 ; 200) comportant en outre :
deux mâchoires de serrage (3, 4) reliées entre elles dans la section d'assemblage (5) de manière à pouvoir être déplacées l'une par rapport à l'autre le long d'un axe de serrage (S) et délimitant entre elles un espace de réception (18) pour l'élément plat (2) dans la section de serrage (20), et
deux éléments d'insert (21, 22 ; 121, 122 ; 221, 222) disposés entre les deux mâchoire de serrage (3, 4) dans la section de serrage (20), l'un des deux éléments d'insert (21, 22 ; 121, 122 ; 221, 222) étant respectivement attribué aux deux mâchoires de serrage (3, 4), les éléments d'insert (21, 22 ; 121, 122 ; 221, 222) présentant respectivement deux surfaces de contact (41, 43), parmi lesquelles l'une des deux surfaces de contact (41, 43) est en contact avec la mâchoire de serrage (3, 4) correspondante et une autre des deux surfaces d'appui (41, 43) peut être mise en contact avec l'élément plat (2),
dans lequel chacune des deux surfaces de contact (41, 43) mesure au moins 25 pour cent de la somme des deux surfaces de contact (41, 43) de l'élément d'insert (21, 22 ; 121, 122 ; 221, 222) respectif,
dans lequel l'une au moins des deux mâchoires de serrage (3, 4) présente un contour de réception (23, 24), dans lequel l'élément d'insert (21, 22 ; 121, 122 ; 221, 222) correspondant est reçu dans une première position de réception, dans laquelle un premier espacement (D1 ; D2) est formé entre les deux éléments d'insert (21, 22 ; 121, 122 ; 221, 222), ou dans une deuxième position de réception, dans laquelle un deuxième espacement (D2 ; D3) différent du premier espacement (D1 ; D2) est formé entre les deux éléments d'insert (21, 22 ; 121, 122 ; 221, 222),
**caractérisé en ce que**
- l'élément d'insert (21, 22 ; 121, 122) respectif est conçu de manière à pouvoir tourner autour d'un axe de rotation, de sorte que dans la première position de réception, l'élément d'insert (21, 22 ; 121, 122) respectif peut être mis en contact avec l'élément plat (2) à maintenir avec une première surface de contact (41) parmi les deux surfaces de contact (41, 43) et peut être mis en contact avec l'élément plat (2) à maintenir avec une deuxième surface de contact (43) parmi les deux surfaces de contact (41, 43) dans la deuxième position de réception,
et/ou
- **en ce que** la première position de réception et la deuxième position de réception de l'élément d'insert (221, 222) respectif sont disposées côte à côte le long de l'axe longitudinal (L), de sorte que l'espacement entre les deux éléments d'insert (221, 222) peut être modifié dans l'une des deux positions de réception par déplacement de l'élément d'insert (221, 222) respectif le long de l'axe longitudinal (L).

2. Dispositif de serrage (1 ; 100) selon la revendication 1, **caractérisé en ce que** l'élément d'insert (21, 22 ; 121, 122) respectif présente deux surfaces latérales (44) opposées, lesquelles sont en particulier orientées parallèlement à l'axe de serrage (S), dans lequel les deux surfaces latérales (44) sont conçues de manière axialement symétrique par rapport à un axe de rotation (W), de sorte que par une rotation de l'élément d'insert (21, 22 ; 121, 122) respectif autour de l'axe de rotation (W), la première surface de contact (41) de l'élément d'insert (21, 22 ; 121, 122) respectif est tournée vers la mâchoire de serrage (3, 4) opposée dans la première position de réception, et la deuxième surface de contact (43) de l'élément d'insert (21, 22 ; 121, 122) respectif est tournée vers la mâchoire de serrage (3, 4) opposée dans la deuxième position de réception.

3. Dispositif de serrage (1 ; 100) selon la revendication 2, **caractérisé en ce que** l'axe de rotation (W) est orienté perpendiculairement à l'axe de serrage (S) et/ou perpendiculairement à l'axe longitudinal (L).

4. Dispositif de serrage (1 ; 100) selon la revendication 2 ou 3, **caractérisé en ce que** la première surface de contact (41) de l'élément d'insert (21, 22 ; 121, 122) respectif est plus petite que la deuxième surface de contact (43) de l'élément d'insert (21, 22 ; 121, 122) respectif.

5. Dispositif de serrage (1 ; 100) selon l'une des revendications 2 à 4, **caractérisé en ce que** l'élément d'insert (21, 22 ; 121, 122) respectif s'applique sur la surface d'appui (A) de la mâchoire de serrage (3, 4) correspondante avec la deuxième surface de contact (43) dans la première position de réception et avec une surface de base (42) en retrait par rapport à la première surface de contact (41) dans la deuxième position de réception.

6. Dispositif de serrage (1 ; 100) selon l'une des revendications 2 à 5, **caractérisé en ce que** l'élément d'insert (21, 22 ; 121, 122) respectif présente au moins une saillie (38, 39), laquelle fait saillie dans l'au moins un évidement (25, 26) de la mâchoire de serrage (3, 4) correspondante lorsque l'élément d'insert (21, 22 ; 121, 122) respectif est placé dans la deuxième position de réception, dans lequel la première surface de contact (41) est formée sur l'au moins une saillie (38, 39).

7. Dispositif de serrage (1 ; 100) selon la revendication 6, **caractérisé en ce que** dans la deuxième position de réception, l'au moins une saillie (38, 39) de l'élément d'insert (21, 22 ; 121, 122) respectif s'engage par complémentarité de forme dans l'au moins un évidement (25, 26) de la mâchoire de serrage (3, 4) correspondante.

8. Dispositif de serrage (1 ; 100) selon la revendication 6 ou 7, **caractérisé en ce que** l'au moins un contour de réception (23, 24) de la mâchoire de serrage (3, 4) respective présente plusieurs évidements (25, 26) séparés les uns des autres par des nervures (32), dans lequel les nervures (32) présentent des surfaces de nervure (33), dans lequel la surface d'appui (A) de la mâchoire de serrage (3, 4) respective comporte les surfaces de nervure (33) respectives, et **en ce que** l'élément d'insert (21, 22 ; 121, 122) correspondant présente respectivement plusieurs des saillies (38, 39), lesquelles font saillie dans les évidements (25, 26) de la mâchoire de serrage (3, 4) correspondante dans la deuxième position de réception de l'élément d'insert (21, 22 ; 121, 122) correspondant.

9. Dispositif de serrage (1 ; 100) selon la revendication 8, **caractérisé en ce qu'**un premier côté extérieur (36) de l'élément d'insert (21, 22 ; 121, 122) respectif présentant la première surface de contact (41) présente les saillie (38, 39), dans lequel les saillies (38, 39) forment conjointement un gradin, lequel est interrompu par des rainures longitudinales (40).

10. Dispositif de serrage (1) selon l'une des revendications 1 à 9, **caractérisé en ce que** dans la section de serrage (20), sur des côtés intérieurs des deux mâchoires de serrage (3, 4) tournés les uns vers les autres, des régions de bord (45) sont formés avec des cannelures (47, 48, 49, 50), dans lequel l'une des cannelures (47, 48) d'une mâchoire de serrage (3) forme respectivement une paire de cannelures avec l'une des cannelures (49, 50) de la mâchoire de serrage (4) opposée, et **en ce que** le dispositif de serrage (1) présente un élément de paroi emboîtable (51) avec deux nervures (52), lesquelles peuvent être emboîtées au choix dans les cannelures (47, 48, 49, 50) de l'une des deux paires de nervures.

11. Dispositif de serrage (1) selon la revendication 10, **caractérisé en ce que** l'élément de paroi (51) présente un ressort (53) sur une face frontale tournée vers la section d'assemblage (5), et **en ce que** deux fentes (54) sont formées dans l'une des deux mâchoires de serrage (3), dans lequel le ressort (53) peut être inséré au choix dans l'une des deux fentes (54).

12. Dispositif de serrage (1) selon la revendication 11, **caractérisé en ce que** le ressort (53) forme une contredépouille (55) s'étendant parallèlement à l'axe de serrage (S).

13. Dispositif de serrage (1) selon l'une des revendications 10 à 12, **caractérisé en ce que** la surface d'appui (A) de la mâchoire de serrage (3, 4) respective est en retrait par rapport à la région de bord (45) respective.

14. Agencement de garde-corps comprenant au moins une partie de support, sur laquelle est disposé au moins un dispositif de serrage (1 ; 100 ; 200) pour un élément plat (2), dans lequel le dispositif de serrage (1 ; 100 ; 200) est conçu selon l'une des revendications 1 à 13.
